# EUROPEAN PATENT APPLICATION

(11) **EP 4 722 016 A1**
(43) Date of publication of application: **08.04.2026**
(21) Application number: 24204092.1
(22) Date of filing: 02.10.2024
(51) Int. Cl.: B60L 1/02, B60L 7/10, B60L 58/12, B60L 58/13, B60L 7/02

(54) **AN ENERGY STORAGE SYSTEM OF A VEHICLE**

(71) Applicant: Volvo Construction Equipment AB, 631 85 Eskilstuna (SE)
(72) Inventor: SELANDER, Alexander, 362 98 ÄLMEBODA (SE); ANDERSSON, Magnus, 352 60 VÄXJÖ (SE); KVIST, Roland, 360 42 BRAÅS (SE)
(74) Representative: Kransell & Wennborg KB

(57) **Abstract**

An energy storage system (30) of a vehicle (1) equipped with a regenerative braking system (2) and comprising: a battery pack (32) configured to power an electric traction machine (10) and being operable according to predefined limited state of charge (SOC) limits (140) extending from a lower limited SOC limit (130a) to an upper limited SOC limit (130b), and predefined extended SOC limits (142); a heat storage tank (34) comprising heating fluid and an electrical heater (36); a processing circuitry (17) configured to: in response of determining an anticipated cold start operating mode, charge the battery pack (32) in accordance with the extended SOC limits (142) to at least above a level corresponding to that of the upper limited SOC limit (130b), and during subsequent operation of the vehicle (1) and in response of that the SOC of the battery pack (32) is above the upper limited SOC limit (130b), power the electric heater (36) by the regenerative braking system (2) to heat the heating fluid of the heat storage tank (34).

## Description

### TECHNICAL FIELD

The disclosure relates generally to energy storage systems. In particular aspects, the disclosure relates to an energy storage system of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle, unless explicitly stated so.

### BACKGROUND

Battery electric vehicles (BEVs) are becoming increasingly common in the heavy machinery sector, particularly for work machines such as dump trucks, loaders, and other large vehicles used in mining, construction, and similar industries. These machines offer significant advantages over traditional internal combustion engine vehicles, such as reduced emissions and lower operating costs. However, BEVs still face several critical challenges that affect their operational efficiency and performance, particularly in extreme environmental conditions such as cold climates.

One major issue with battery electric machinery is the limited state of charge (SOC) range that is often implemented to ensure the longevity and safety of the battery pack. This limited SOC restricts the amount of electrical energy that can be stored and utilized by the vehicle, particularly for operations requiring significant power over extended periods. For heavy-duty vehicles, such as dump trucks operating in mining sites, the limitation on the battery's SOC can significantly reduce the operational time, especially when the vehicle must frequently recharge.

Another significant challenge is the poor performance of batteries in lowtemperature environments. At cold temperatures, such as those experienced in arctic mining locations, the efficiency and performance of the battery pack are severely affected. Cold temperatures can drastically reduce the available power output, prevent effective regenerative braking, and even impede the battery's ability to accept charge. For example, a mining dump truck operating in sub-zero temperatures may have difficulty utilizing regenerative braking effectively due to the battery's inability to accept additional charge when the SOC is near its upper limit.

Moreover, the regenerative braking system of battery electric vehicles presents an additional challenge. While regenerative braking provides an efficient means of recovering energy, the cold temperatures can prevent the battery from storing this energy, leading to a loss of the system's full braking capacity, particularly when the battery is fully charged. This issue is further exacerbated by the need for retarder braking functionality, especially in heavy machinery, where downhill loads require effective braking to ensure both safety and control.

In cold environments, additional thermal management challenges arise. Heating both the cabin and battery pack to maintain operational temperatures typically consumes a significant portion of the vehicle's available energy, further limiting the overall operational range.

Thus, there is a need for an improved energy management system that can optimize the vehicle's battery utilization, maximize operational time, and maintain regenerative braking performance in cold start conditions.

### SUMMARY

According to a first aspect of the disclosure, an energy storage system of a vehicle equipped with a regenerative braking system is provided. The energy storage system comprises: a battery pack configured to power an electric traction machine of the vehicle, the battery pack being operable according to predefined limited state of charge (SOC) limits extending from a lower limited SOC limit to an upper limited SOC limit, and predefined extended SOC limits extending from a lower extended SOC limit to an upper extended SOC limit, the upper extended SOC limit being higher than the upper limited SOC limit; a heat storage tank comprising a heating fluid and an electrical heater; a processing circuitry configured to: determine an anticipated operating mode of the vehicle as a predefined cold start operating mode, in response of determining the anticipated cold start operating mode, charge the battery pack in accordance with the extended SOC limits to at least above a level corresponding to that of the upper limited SOC limit; and during subsequent operation of the vehicle by powering the electric traction machine by the battery pack, and in response of that the SOC of the battery pack is within the extended SOC limits and above a level corresponding to that of the upper limited SOC limit, power the electric heater by the regenerative braking system to heat the heating fluid of the heat storage tank. The first aspect of the disclosure may seek to solve problems with energy inefficient energy storage systems, in particular related to cold start operation. A technical benefit may include an improved energy efficiency of the energy storage system, and/or improved performance of the energy storage system in relation to the cold start operation mode. The cold start operation mode may simply be referred to as a "cold start". By providing an electric heater which is powered by the regenerative braking system, the battery pack can be charged to a level surpassing the corresponding upper limited SOC limit, even if the regenerative braking system is expected to operated subsequent to the cold start (e.g. within 10 minutes of the cold start) as the electric energy can be routed to the electric heater instead of the battery pack, at least in response to that the SOC of the battery pack is above a level corresponding to the upper limited SOC limit. In other words, subsequent to the cold start, the energy produced by the regenerative braking system can be utilized in an advantageous manner, while the battery pack can be charged according to the predefined extended SOC limits and above a level corresponding to the upper limited SOC limit. Hereby, an improved energy storage system is provided. Typically, electrical connections are provided for connecting each one of the battery pack and the electrical heater with the regenerative braking system of the vehicle.

Thus, the powering of the electric heater by the regenerative braking system to heat the heating fluid of the heat storage tank is performed in response to operating the vehicle subsequent to the cold start (i.e. a cold start operating mode), e.g. within a predetermined time of the cold start, e.g. 10 minutes. In other words, the processing circuitry may be configured to, upon a cold start, power the electric heater by the regenerative braking system to heat the heating fluid of the heat storage tank for at least a predetermined time. Correspondingly, the powering of the electric traction machine by the battery pack in the subsequent operation of the vehicle is typically referring to subsequent to the cold start or cold start operation of the vehicle. The subsequent operation of the vehicle may thus be a subsequent cold start operation of the vehicle, and may e.g. occur during the previously mentioned predetermined time shortly after the cold start (e.g. 10 minutes).

Also, the charging of the battery pack in accordance with the extended SOC limits and at least above a level corresponding to the upper limited SOC limit is performed in response to determining the anticipated cold start operating mode, and is thus performed prior to the cold start, and prior to said subsequent operation of the vehicle by powering the electric traction machine by the battery pack. The battery pack is typically charged by an external charging station (i.e. external of the vehicle), e.g. powered by the common grid or mains electricity. Prior to said operating the vehicle by powering the electric traction machine by the battery pack may be corresponding to prior vehicle start-up or at least electric traction machine start-up. That is, the vehicle startup or electric traction machine start-up may be defined by that the electric traction machine is powered by the battery pack to propel the vehicle. Thus, charging the battery pack in accordance with the extended SOC limits and at least above a level corresponding to the upper limited SOC limit is performed prior the cold start operating mode, and in response to an anticipated cold start operating mode, typically within 10 hours, or within 5 hours, or within 1 hour or within 30 minutes of the cold start operating mode.

The processing circuitry may be configured to determine an operating mode of the vehicle as a predefined regenerative braking operating mode associated with power regeneration of the electric traction machine, and thus perform powering of the electric heater by the regenerative braking system to heat the heating fluid of the heat storage tank in response to identifying such predefined regenerative braking operating mode.

Optionally in some examples, the processing circuitry is further configured to, in response of that the SOC of the battery pack is below a level corresponding to that of the upper limited SOC limit, charge the battery pack by the regenerative braking system, and optionally simultaneously power the electric heater by the regenerative braking system to heat the heating fluid of the heat storage tank. A technical benefit may include advantageous utilization of the energy produced from the regenerative braking system. Thus, such charging of the battery pack and/or powering of the electric heater by the regenerative braking system is performed subsequent to the cold start, e.g. during said subsequent operation of the vehicle.

Optionally in some examples, the energy storage system optionally comprises a cabin heater fluidly coupled to the heat storage tank, wherein the processing circuitry is further configured to control fluid flow of the heating fluid to at least one of the battery pack and the optional cabin heater. A technical benefit may include advantageous utilization of the heating fluid, and thus efficient utilization of the energy from the regenerative braking system. The heating fluid may thus be used, subsequent to be heated by the electric heater, to heat the battery pack and/or the optional cabin heater.

Optionally in some examples, the energy storage system further comprises an external radiator fluidly coupled to the heat storage tank, wherein the processing circuitry is further configured to control fluid flow of the heating fluid to the external radiator in response to that the temperature of the heating fluid in the heat storage tank is above a predefined temperature threshold value. A technical benefit may include safeguarding the heat storage tank from overheating. The heating fluid may thus be used, subsequent to be heated by the electric heater, to heat the external radiator. For example, the processing circuitry may be further configured to control fluid flow of the heating fluid to the external radiator until the temperature of the heating fluid in the heat storage tank is below the predefined temperature threshold value. The predefined temperature threshold value may correspond to an overheating temperature of the heat storage tank, or a maximum allowed temperature of the heating fluid in the heat storage tank. In other words, the processing circuitry may be configured to, in response of determining that the temperature of the heating fluid in the heat storage tank is above the predefined temperature threshold value (e.g. a maximum allowable temperature of the heating fluid), control fluid flow of the heating fluid to the external radiator to thereby reduce the temperature of the heating fluid in the heat storage tank. For example, the processing circuitry may be configured to determine the temperature of the heating fluid in the heat storage tank, and control fluid flow of the heating fluid to the external radiator in response to the determined temperature (and with regards to temperature criteria mentioned above).

Optionally in some examples, the predefined cold start operating mode is defined at least by that the ambient temperature of the vehicle is below a predetermined ambient temperature threshold value. A technical benefit may include improved performance of the energy storage system in relation to the cold start operation mode. For example, the predetermined ambient temperature threshold value may be 15 °C, 10 °C, 5 °C, 0 °C, - 5 °C or -10 °C.

Optionally in some examples, the predefined cold start operating mode is defined at least by that the electric traction machine is started from shutdown by power from the battery pack. A technical benefit may include improved performance of the energy storage system in relation to the cold start operation mode. For example, that the electric traction machine is started from shutdown by power from the battery pack may correspond to that the vehicle is started from shutdown. The electric traction machine is typically started from shutdown by power from the battery pack in order to provide propulsion power to the vehicle.

Optionally in some examples, the predefined cold start operating mode is defined at least by that the battery temperature, e.g. the temperature (or average temperature) of the battery pack, or the temperature (or average temperature) of the battery cells in the battery pack, is deviating from an optimal or rated battery temperature by a predetermined temperature difference, and wherein the battery temperature is lower than the optimal or rated battery temperature. For example, the predetermined temperature difference may be 3 °C, 5 °C, 10 °C, 15 °C, 20 °C, 25 °C, 30 °C or even 40 °C or 45 °C. For example, the optimal or rated battery temperature may be somewhere in the range of 20 °C to 30 °C (e.g. 25 °C). For example, with regards to such optimal or rated battery temperature, at a battery temperature of e.g. -20 °C, the battery pack may be operable by approximately 1 to 10 % of its full capacity, at a battery temperature of e.g. -10 °C, the battery pack may be operable by approximately 10 to 20 % of its full capacity, at a battery temperature of e.g. 0 °C, the battery pack may be operable by approximately 40 to 50 % of its full capacity, at a battery temperature of e.g. 10 °C, the battery pack may be operable by approximately 70 to 100 % of its full capacity and at a battery temperature of e.g. 20 °C, the battery pack may be operable by approximately 100 % of its full capacity, possibly with small deviations in charging performance.

Optionally in some examples, the vehicle is a loader or a dumper. The energy storage system of the first aspect may thus be specifically configured for a loader or a dumper.

Optionally in some examples, the heat storage tank is arranged distant from the battery pack. A technical benefit may include an advantageous separation between the battery pack and the heat storage tank.

Optionally in some examples, the processing circuitry is further configured to selectively prioritize charging the battery pack and powering the electrical heater for heating the heating fluid in the heat storage tank based on the SOC of the battery pack and the temperature of the heating fluid in the heat storage tank. A technical benefit may include improved utilization of the energy produced from the regenerative braking system. Thus, such charging of the battery pack and/or powering of the electric heater by the regenerative braking system is performed subsequent to the cold start, e.g. during said subsequent operation of the vehicle.

Optionally in some examples, the heat storage tank comprises a thermal insulation layer configured to reduce heat losses. A technical benefit may include improved energy efficiency. The thermal insulation layer may e.g. be polymer, e.g. polyurethane. A thermal insulation of the heat storage tank is particularly useful during periods of inactivity, such as vehicle shutdown or waiting periods.

According to second aspect of the disclosure, a computer-implemented method is provided. The method comprises: determining, by a processing circuitry of a computer system, SOC operating windows of a battery pack configured to power an electric traction machine of an electric vehicle, according to predefined limited state of charge limits extending from a lower limited SOC limit to an upper limited SOC limit, and predefined extended SOC limits extending from a lower extended SOC limit to an upper extended SOC limit, the upper extended SOC limit being higher than the upper limited SOC limit; determining, by the processing circuitry, an anticipated operating mode of the vehicle as a predefined cold start operating mode; in response of determining the anticipated cold start operating mode, charging, by the processing circuitry, the battery pack in accordance with the extended SOC limits to at least above a level corresponding to that of the upper limited SOC limit; during subsequent operation of the vehicle by powering the electric traction machine by the battery pack, and in response of that the SOC of the battery pack is within the extended SOC limits and above a level corresponding to that of the upper limited SOC limit, powering, by the processing circuitry, an electric heater arranged in a heat storage tank comprising a heating fluid by a regenerative braking system of the vehicle in order to heat the heating fluid of the heat storage tank. The energy storage system may typically correspond to that already described with reference to the first aspect of the disclosure. The second aspect of the disclosure may seek to solve the same problem as described for the first aspect of the disclosure. Thus, effects and features of the second aspect of the disclosure are largely analogous to those described above in connection with the first aspect of the disclosure, of which at least some are mentioned hereafter, typically without repeating the technical effect.

Optionally in some examples, the method further comprises: in response of that the SOC of the battery pack is below a level corresponding to that of the upper limited SOC limit, charging, by the processing circuitry, the battery pack by the regenerative braking system, and optionally simultaneously powering, by the processing circuitry, the electric heater by the regenerative braking system to heat the heating fluid of the heat storage tank.

Optionally in some examples, the method further comprises: controlling, by the processing circuitry, fluid flow of the heating fluid to at least one of the battery pack and an optional cabin heater fluidly coupled to the heat storage tank. For example, the method may comprise controlling a corresponding valve of the heat storage tank, or controlling a corresponding valve in a heat fluid transportation line upstream of the battery pack and/or optional cabin heater.

Optionally in some examples, the method further comprises: controlling, by the processing circuitry, fluid flow of the heating fluid to an external radiator fluidly coupled to the heat storage tank in response to that the temperature of the heating fluid in the heat storage tank is above a predefined temperature threshold value. Again, the method may comprise controlling a corresponding valve of the heat storage tank, or controlling a corresponding valve in a heat fluid transportation line upstream of the external radiator.

Optionally in some examples, the predefined cold start operating mode is defined at least by that the ambient temperature of the vehicle is below a predetermined ambient temperature threshold value.

Optionally in some examples, the predefined cold start operating mode is defined at least by that the electric traction machine is started from shutdown by power from the battery pack.

Optionally in some examples, the method further comprises: selectively prioritizing, by the processing circuitry, charging the battery pack and powering the electrical heater for heating the heating fluid in the heat storage tank based on the SOC of the battery pack and the temperature of the heating fluid in the heat storage tank.

According to third aspect of the disclosure, a computer program product comprising program code for performing, when executed by the processing circuitry, the method of the second aspect of the disclosure, is provided.

According to fourth aspect of the disclosure, a non-transitory computer-readable storage medium comprising instructions, which when executed by the processing circuitry, cause the processing circuitry to perform the method of the second aspect of the disclosure, is provided.

According to fifth aspect of the disclosure, a vehicle comprising the energy storage system of the first aspect of the disclosure is provided. The vehicle may e.g. be a loader or a dumper. The vehicle is an electric vehicle, such as a full electric vehicle or a hybrid.

The third, fourth and fifth aspects of the disclosure may seek to solve the same problem as described for the first and second aspects of the disclosure. Thus, effects and features of the third, fourth and fifth aspects of the disclosure are largely analogous to those described above in connection with the first and second aspects of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary, partly schematic, side view of a vehicle comprising a powertrain with a battery pack in an energy storage system according to one example.
**FIG. 2** is a graph showing limited and extended predetermined SOC limits of a battery pack according to one example.
**FIG. 3** is an exemplary, partly schematic, view of an energy storage system according to one example.
**FIG. 4** is a flowchart of an exemplary method according to one example.
**FIG. 5** is a schematic diagram of an exemplary computer system for implementing examples disclosed herein, according to one example.

### DETAILED DESCRIPTION

The detailed description set forth below provides information and examples of the disclosed technology with sufficient detail to enable those skilled in the art to practice the disclosure.

The disclosed technology may solve the problem relating to energy inefficient energy storage systems, in particular related to cold start operation. The disclosed technology uses an electric heater arranged in a heat storage tank for heating a heating fluid, which electric heater is powered by the regenerative braking system, so the battery pack can be charged to a level surpassing the corresponding upper limited SOC limit, even if the regenerative braking system is expected to operated subsequent to the cold start as the electric energy can be routed to the electric heater instead of the battery pack, at least in response to that the SOC of the battery pack is above a level corresponding to the upper limited SOC limit. A technical benefit may include an improved energy efficiency of the energy storage system, and/or improved performance of the energy storage system in relation to the cold start operation mode. By the provisions of the electric heater, the energy produced by the regenerative braking system in a vehicle operation subsequent to the cold start can be utilized in an advantageous manner, while the battery pack can be charged according to the predefined extended SOC limits and above a level corresponding to the upper limited SOC limit.

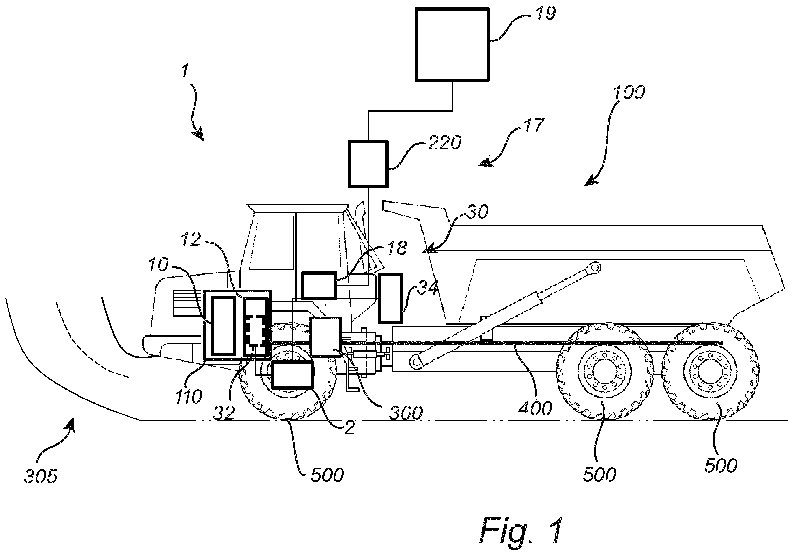

**FIG. 1** shows an exemplary heavy duty truck 1. The truck 1 is an electric vehicle, such as a full electric vehicle or a hybrid, comprising a powertrain 100 having an electric driveline 110 comprising a rechargeable energy storage arrangement 12 including at least one battery pack 32, and a at least one electric traction machine 10 powered by the battery pack 32. As seen in Fig. 1, the powertrain 100 may further comprise a transmission 300 comprising at least a gearbox, and drive shafts 400, schematically shown to transfer motion to the drive wheels 500. In the example of Fig. 1, the energy storage arrangement 12 is exemplified with one battery pack 32, but it should be mentioned that the energy storage arrangement 12 may comprise a plurality of battery packs.

The truck 1 typically comprises a regenerative braking system 2 of a known type. The regenerative braking system 2 generally comprises a kinetic energy recovery system configured to transfer kinetic energy of an object in motion, i.e. the truck 1, into stored energy, i.e. charging of the battery pack 32, to slow the truck 1 down. For example, the regenerative braking system 2 comprises an electric generator, which preferably is the same component as the previously mentioned electric traction machine 10. Thus, the energy produced when slowing the truck 1 down, typically by braking, is stored chemically in the battery pack (i.e. regenerative charging of the battery pack 32, or simply battery regeneration). The battery regeneration of the regenerative braking system 2 is typically associated with a regeneration efficiency, i.e. how efficient the energy produced when slowing the truck 1 down is stored in the battery pack 32. The truck 1 may optional comprise service brakes of a known type, typically as drum brakes or disc brakes on the wheels 500 of the two rear axles. Such service brakes forms a separate braking arrangement to the regenerative braking system 2.

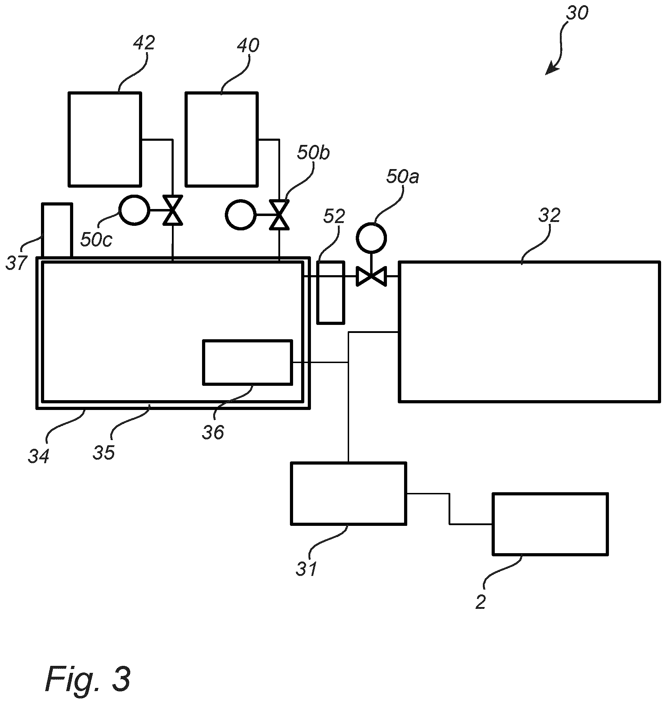

The truck 1 further comprises a heat storage tank 34 comprising a heating fluid and an electrical heater 36 (shown in Fig. 3). The battery pack 32 and the heat storage tank 34 are comprised in an energy storage system 30 of the vehicle 1.

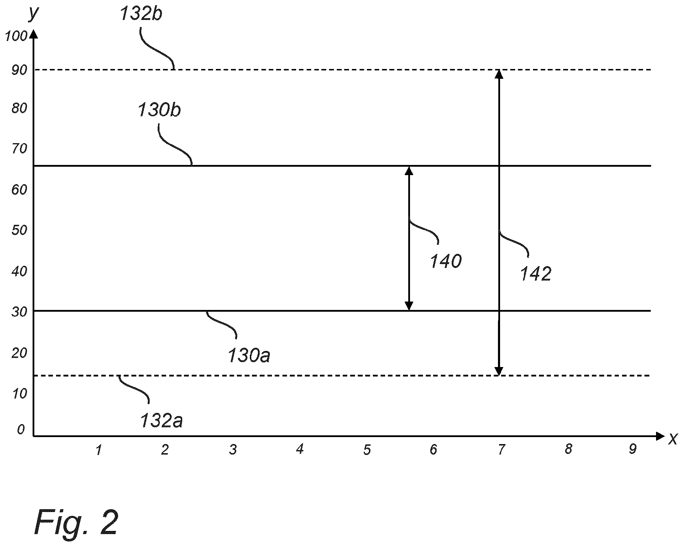

With additional reference to **FIG. 2**, the battery pack 32 is configured to be operated within predefined operating windows defined by its state of charge (SOC). In the graph of Fig. 2, the y-axis represents the theoretical SOC of the battery pack 32 defined by the nominal SOC of 100 %, and the x-axis represents time (in units of e.g. minutes). In particular, the battery pack 32 is operable according to predefined limited SOC limits 140, being referred to as a predefined limited SOC operating window 140. The predefined limited SOC operating window 140 is defined to extend from a lower limited SOC limit 130a, which in Fig. 2 is exemplified as 30 % of the theoretical SOC, to an upper limited SOC limit 130b, which in Fig. 2 is exemplified as 65 % of the theoretical SOC. The predefined limited SOC operating window 140 may be referred to as predefined default, or normal, SOC operating window.

Moreover, the battery pack 32 is operable according to predefined extended SOC limits 142, being referred to as a predefined extended SOC operating window 142. The predefined extended SOC operating window 142 is defined to extend from a lower extended SOC limit 132a, which in Fig. 2 is exemplified as 15 % of the theoretical SOC, to an upper extended SOC limit 132b, which in Fig. 2 is exemplified as 90 % of the theoretical SOC. Thus, as shown in Fig. 2, the lower extended SOC limit 132a is lower, or extended, compared to the lower limited SOC limit 130a, and the upper extended SOC limit 132b is higher, or extended, compared to the higher limited SOC limit 130b. However, it should be noted that the lower extended SOC limit 132a may be the same as the lower limited SOC limit 130a, as long as the upper extended SOC limit 132b is higher than the upper limited SOC limit 130b (hence the extended SOC operating window 142 is still wider, or extended, compared to the limited SOC operating window 140). For simplicity, the operating SOC-values of the predefined limited SOC limits 140 and the predefined extended SOC limits 142 are straight lines in Fig. 2, and are thus shown to be constant over the given time period (but they may alternatively vary over the given time period).

The truck 1 further comprises processing circuitry 17, e.g. comprised in a control unit 18 (e.g. an ECU), configured to communicate with the energy storage system 30 and the battery pack 32. For example, the processing circuitry 17 is configured to set the predefined operation windows of the battery pack 32 according to e.g. predefined limited SOC operating window 140 or the predefined extended SOC operating window 142, i.e. to operate the battery pack 32 according to predefined limited SOC limits or predefined extended SOC limits. The processing circuitry 17 may e.g. be configured to communicate with a memory 19, e.g. a memory of the truck 1, or a memory of an external server database, and receive data 220 including the predefined limited SOC operating window 140 and the predefined extended SOC operating window 142 from the memory 19. The memory 19 may form part of the control unit 18, or control system thereof.

In **FIG. 3****,** the energy storage system 30 of Fig. 1 is shown in greater detail. As show, the energy storage system 30 comprises the battery pack 32 and the heat storage tank 34 described with reference to Fig. 1. The heat storage tank 34 comprises a heating fluid and an electric heater 36 arranged to heat the heating fluid in the heat storage tank 34. The battery pack 32 and the electric heater 36 is electrically connected to the regenerative braking system 2 via electrical connections 31, schematically shown in Fig. 3. The electrical connections 31 may furthermore electrically connect the battery pack 32 with the electric traction machine 10.

The battery pack 32 is fluidly coupled to the heat storage tank 34, such that the heating fluid may be provided to heat the battery tank 32 (e.g. by being provided to heating channels within the battery pack 32). The flow of heating fluid from the heat storage tank 34 to the battery pack 32 is controlled by a first controllable valve 50a. As also shown in Fig. 3, a heat exchanger 52 may be arranged in between the heat storage tank 34 and the battery pack 32 for heat exchange between outgoing and incoming heating fluid relative to the heat storage tank 34. It should be noted that the heating fluid lines for the battery pack 32, the cabin heater 40 and the external radiator 42 are schematical and typically includes corresponding outgoing and incoming heating fluid lines.

As also shown in Fig. 3, the energy storage system 30 comprises a cabin heater 40 fluidly coupled to the heat storage tank 34, and an external radiator 42 fluidly coupled to the heat storage tank 34. The flow of heating fluid from the heat storage tank 34 to the cabin heater 40 is controlled by a second controllable valve 50b, and the flow of heating fluid from the heat storage tank 34 to the external radiator is controlled by a third controllable valve 50c.

With additional reference to Figs. 1-2, the configuration of the energy storage system 30, and its operation by the processing circuitry 17, with regards to at least the regenerative braking system 2 will now be described in more detail.

The processing circuitry 17 is configured to determine an anticipated operating mode of the vehicle 1 as a predefined cold start operating mode. The anticipated cold start operating mode is typically determined, or identified, in a vehicle state in which the electric traction machine 10 is shutdown (or shut off), potentially in a state in which the vehicle is shutdown or shut off (with the exception of the processing circuitry 17). The predefined cold start operating mode may be defined at least by that the ambient temperature of the vehicle is below a predetermined ambient temperature threshold value, e.g. 15 °C, 10 °C, 5 °C, 0 °C, - 5 °C or -10 °C. Additionally or alternatively, the predefined cold start operating mode is defined at least by that the electric traction machine 10 is started from shutdown by power from the battery pack. For example, the processing circuitry 17 is configured to determine, or identify, an anticipated operating mode as a predefined cold start operating mode in response to that the electric traction machine 10 is to be started from shutdown by power from the battery pack, potentially at an ambient temperature of the vehicle being below the predetermined ambient temperature threshold value. Additionally or alternatively, the predefined cold start operating mode is defined at least by that the battery temperature, e.g. the temperature (or average temperature) of the battery pack 32, or the temperature (or average temperature) of the battery cells in the battery pack 32, is deviating from an optimal or rated battery temperature by a predetermined temperature difference, and wherein the battery temperature is lower than the optimal or rated battery temperature. Typically, the battery temperature is determined by using a temperature sensor associated with the battery pack 32.

The processing circuitry 17 is further configured to, in response of determining the anticipated cold start operating mode, charge the battery pack 32 in accordance with the extended SOC limits 142 to at least above a level corresponding to that of the upper limited SOC limit 130b. Hereby, the battery pack 32 can be charged to a level surpassing the corresponding upper limited SOC limit 130b.

The processing circuitry 17 is further configured to, during subsequent operation of the vehicle 1 by powering the electric traction machine 10 by the battery pack 32, and in response of that the SOC of the battery pack 32 is within the extended SOC limits 142 and above a level corresponding to that of the upper limited SOC limit 130b, power the electric heater 36 by the regenerative braking system 2 to heat the heating fluid of the heat storage tank 34. Thus, subsequent to the cold start operating mode of the vehicle 1, as the vehicle 1 is operated by that the battery pack 32 is powering the electric traction machine 10, typically for propelling the vehicle 1 (e.g. along the road 305), the regenerative braking system 2 may be used to heat the heating fluid of the heat storage tank 34 by the electric heater 36 instead of charging the battery pack 32. Thus, by powering the electric heater 36 by the regenerative braking system 2 instead of the battery pack 32, the battery pack 32 can be preemptively charged to a level surpassing the corresponding upper limited SOC limit 130b, even if the regenerative braking system 2 is expected to be operated subsequent to the cold start (e.g. within 10 minutes of the cold start).

The processing circuitry 17 may be further configured to, in response of that the SOC of the battery pack 32 is below a level corresponding to that of the upper limited SOC limit 130b, charge the battery pack 32 by the regenerative braking system 2, and optionally simultaneously power the electric heater 36 by the regenerative braking system 2 to heat the heating fluid of the heat storage tank 34. Thus, subsequent to the cold start operating mode of the vehicle 1, as the vehicle 1 is operated by that the battery pack 32 is powering the electric traction machine 10, typically for propelling the vehicle 1, the regenerative braking system 2 may be used to charge the battery pack 32 and optionally to heat the heating fluid of the heat storage tank 34 by the electric heater 36. Hereby, the battery pack 32 may be charged to a level corresponding to hat of the upper limited SOC limit 130b, or even to a level surpassing the upper limited SOC limit 130b, e.g. up to the upper extended SOC limit 132b. For example, the processing circuitry 17 may be configured to selectively prioritize charging the battery pack 32 and powering the electrical heater 36 for heating the heating fluid in the heat storage tank 34 based on the SOC of the battery pack 32 and the temperature of the heating fluid in the heat storage tank 34.

The processing circuitry 17 may be further configured to control fluid flow of the heating fluid to the battery pack 32, e.g. by controlling the first controllable valve 50a. Hereby, the heating fluid may be used, subsequent to be heated by the electric heater 36, to heat the battery pack 32. Additionally or alternatively, the processing circuitry 17 is further configured to control fluid flow of the heating fluid to the cabin heater 40, e.g. by controlling the second controllable valve 50b. Hereby, the heating fluid may be used, subsequent to be heated by the electric heater 36, to heat the cabin heater 40.

The processing circuitry 17 may be further configured to control fluid flow of the heating fluid to the external radiator 42, e.g. by controlling the third controllable valve 50c, in response to that the temperature of the heating fluid in the heat storage tank 34 is above a predefined temperature threshold value. Hereby, the heating fluid in the heat storage tank 34 may be prevented from being overheated. The external radiator 42 may e.g. be arranged in an outer periphery of the energy storage system 30, or even in an outer periphery of the vehicle 1, such as e.g. on an outer surface of the chassis of the vehicle 1. The external radiator 42 is different from any internal radiator (or heating channels) used in the battery pack 32 for heating purposes, and different from the cabin heater 40.

Typically, the heat storage tank 34 is arranged distant from the battery pack 32, as can be seen in Fig. 1. Moreover, the heat storage tank 34 is typically provided with a thermal insulation layer 35 configured to reduce heat losses. The thermal insulation layer 35 is preferably arranged to encapsulate the heat storage tank 34. Additionally or alternatively, the heat storage tank 34 may comprise an expansion tank or safety valve 37.

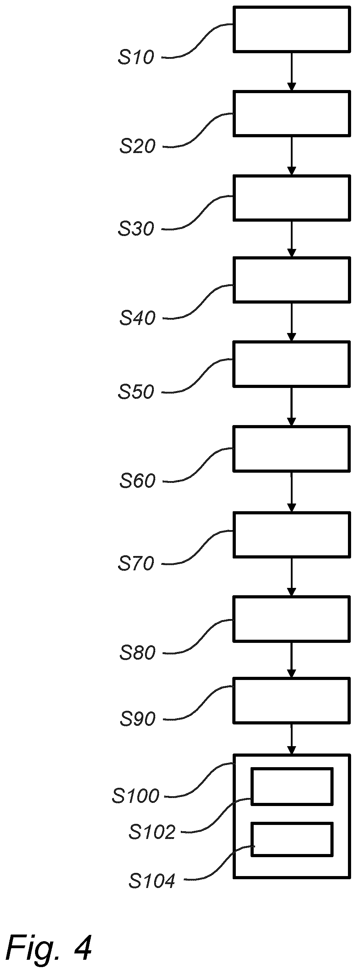

**FIG. 4** is a flow chart of a method for controlling an energy storage system of a vehicle, in particular with regards to a regenerative braking system of the vehicle, e.g. the energy storage system 30, the regenerative braking system 2 and the vehicle 1 described with reference to Figs. 1-3. Thus, reference is further made to features described in Figs. 1-3 in the following. The method is a typically a computer-implemented method, using the previously described processing circuitry 17 for implementation of the action or steps.

In a first action or step, S10, SOC operating windows 140, 142 of a battery pack 32 configured to power an electric traction machine 10 of an electric vehicle 1 is determined by a processing circuitry 17 of a computer system, according to predefined limited state of charge SOC limits 140 extending from a lower limited SOC limit 130a to an upper limited SOC limit 130b, and predefined extended SOC limits 142 extending from a lower extended SOC limit 132a to an upper extended SOC limit 132b, the upper extended SOC limit 132b being higher than the upper limited SOC limit 130b.

In a second action or step, S20, an anticipated operating mode of the vehicle 1 as a predefined cold start operating mode is determined by the processing circuitry 17. The predefined cold start operating mode may be defined as previously described.

In a third action or step, S30, and in response of determining the anticipated cold start operating mode, the battery pack 32 is charged by the processing circuitry 17, in accordance with the extended SOC limits 142 to at least above a level corresponding to that of the upper limited SOC limit 130b. The battery pack 32 is typically charged by an external charging station (i.e. external of the vehicle 1), e.g. powered by the common grid or mains electricity.

In a fourth action or step, S40, the vehicle 1 is operated in a subsequent operation to the cold start operating mode by powering, by the processing circuitry 17, the electric traction machine 10 by the battery pack 32. For example, the processing circuitry 17 controls the powering of the electric traction machine 10 from the battery pack 32 by controlling the electrical connections 31.

In a fifth action or step, S50, in response of that the SOC of the battery pack 32 is within the extended SOC limits 142 and above a level corresponding to that of the upper limited SOC limit 130b, an electric heater 36 arranged in a heat storage tank 34 comprising a heating fluid is powered, by the processing circuitry 17, by a regenerative braking system 2 of the vehicle in order to heat the heating fluid of the heat storage tank 34. For example, the processing circuitry 17 controls the powering of the electric heater 36 from the regenerative braking system by controlling the electrical connections 31.

In a sixth action or step, S60, in response of that the SOC of the battery pack 32 is below a level corresponding to that of the upper limited SOC limit 130b, the battery pack 32 is charged, by the processing circuitry 17, by the regenerative braking system 2.

In a seventh action or step, S70, in response of that the SOC of the battery pack 32 is below a level corresponding to that of the upper limited SOC limit 130b, the electric heater 36 is powered, by the processing circuitry 17, by the regenerative braking system 2 to heat the heating fluid of the heat storage tank 34. The seventh action or step S70 may optionally be performed simultaneously as the sixth action or step S60.

In an eight action or step, S80, fluid flow of the heating fluid is controlled by the processing circuitry 17, to at least one of the battery pack 32 and an optional cabin heater 40 fluidly coupled to the heat storage tank 34. This may be performed by controlling the first and second controllable valves 50a, 50b as previously described.

In a ninth action or step, S90, fluid flow of the heating fluid is controlled by the processing circuitry 17, to an external radiator 42 fluidly coupled to the heat storage tank 34 in response to that the temperature of the heating fluid in the heat storage tank 34 is above a predefined temperature threshold value. This may be performed by controlling third controllable valve 50c as previously described.

In a tenth action or step, S 100, charging, by the processing circuitry 17, of the battery pack 32, indicated by sub-action or sub-step S102, and powering, by the processing circuitry 17, of the electrical heater 36, indicated by the sub-action or sub-step S 104 for heating the heating fluid in the heat storage tank 34 is prioritized, by the processing circuitry 17, based on the SOC of the battery pack 32 and the temperature of the heating fluid in the heat storage tank 34.

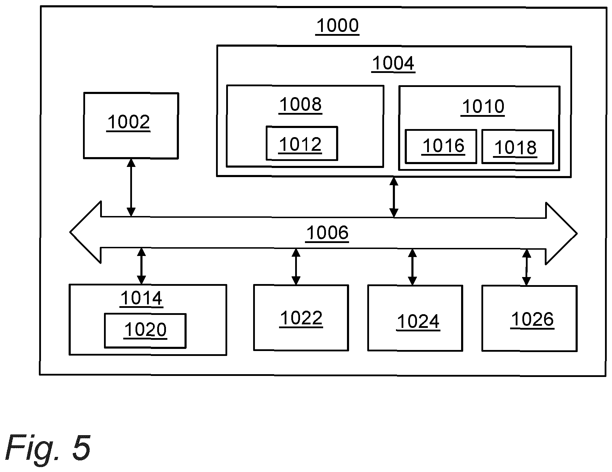

**FIG. 5** is a schematic diagram of a computer system 1000 for implementing examples disclosed herein, e.g. the operation of the processing circuitry 17 as described with reference to Figs. 1-4. The computer system 1000 may be implemented in the control unit 18 of Fig. 1. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include a processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with a processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

Example 1. An energy storage system of a vehicle equipped with a regenerative braking system, the energy storage system comprising: a battery pack configured to power an electric traction machine of the vehicle, the battery pack being operable according to predefined limited state of charge limits extending from a lower limited SOC limit to an upper limited SOC limit, and predefined extended SOC limits extending from a lower extended SOC limit to an upper extended SOC limit, the upper extended SOC limit being higher than the upper limited SOC limit; a heat storage tank comprising a heating fluid and an electrical heater; a processing circuitry configured to: determine an anticipated operating mode of the vehicle as a predefined cold start operating mode; in response of determining the anticipated cold start operating mode, charge the battery pack in accordance with the extended SOC limits to at least above a level corresponding to that of the upper limited SOC limit; during subsequent operation of the vehicle by powering the electric traction machine by the battery pack, and in response of that the SOC of the battery pack is within the extended SOC limits and above a level corresponding to that of the upper limited SOC limit, power the electric heater by the regenerative braking system to heat the heating fluid of the heat storage tank.

Example 2. The energy storage system of example 1, wherein the processing circuitry is further configured to, in response of that the SOC of the battery pack is below a level corresponding to that of the upper limited SOC limit, charge the battery pack by the regenerative braking system, and optionally simultaneously power the electric heater by the regenerative braking system to heat the heating fluid of the heat storage tank.

Example 3. The energy storage system of any one of examples 1-2, optionally comprising a cabin heater fluidly coupled to the heat storage tank, wherein the processing circuitry is further configured to control fluid flow of the heating fluid to at least one of the battery pack and the optional cabin heater.

Example 4. The energy storage system of any of examples 1-3, further comprising an external radiator fluidly coupled to the heat storage tank, wherein the processing circuitry is further configured to control fluid flow of the heating fluid to the external radiator in response to that the temperature of the heating fluid in the heat storage tank is above a predefined temperature threshold value.

Example 5. The energy storage system of any of examples 1-4, wherein the predefined cold start operating mode is defined at least by that the ambient temperature of the vehicle is below a predetermined ambient temperature threshold value.

Example 6. The energy storage system of any of examples 1-5, wherein the predefined cold start operating mode is defined at least by that the electric traction machine is started from shutdown by power from the battery pack.

Example 7. The energy storage system of any of examples 1-6, wherein the vehicle is a loader or a dumper.

Example 8. The energy storage system of any of examples 1-7, wherein the heat storage tank is arranged distant from the battery pack.

Example 9. The energy storage system of any of examples 1-8, wherein the processing circuitry is further configured to selectively prioritize charging the battery pack and powering the electrical heater for heating the heating fluid in the heat storage tank based on the SOC of the battery pack and the temperature of the heating fluid in the heat storage tank.

Example 10. The energy storage system of any of examples 1-9, wherein the heat storage tank comprises a thermal insulation layer configured to reduce heat losses.

Example 11. A computer-implemented method, comprising: determining, by a processing circuitry of a computer system, SOC operating windows of a battery pack configured to power an electric traction machine of an electric vehicle, according to predefined limited state of charge limits extending from a lower limited SOC limit to an upper limited SOC limit, and predefined extended SOC limits extending from a lower extended SOC limit to an upper extended SOC limit, the upper extended SOC limit being higher than the upper limited SOC limit; determining, by the processing circuitry, an anticipated operating mode of the vehicle as a predefined cold start operating mode; in response of determining the anticipated cold start operating mode, charging, by the processing circuitry, the battery pack in accordance with the extended SOC limits to at least above a level corresponding to that of the upper limited SOC limit; during subsequent operation of the vehicle by powering the electric traction machine by the battery pack, and in response of that the SOC of the battery pack is within the extended SOC limits and above a level corresponding to that of the upper limited SOC limit, powering, by the processing circuitry, an electric heater arranged in a heat storage tank comprising a heating fluid by a regenerative braking system of the vehicle in order to heat the heating fluid of the heat storage tank.

Example 12. The method of example 11, further comprising: in response of that the SOC of the battery pack is below a level corresponding to that of the upper limited SOC limit, charging, by the processing circuitry, the battery pack by the regenerative braking system, and optionally simultaneously powering, by the processing circuitry, the electric heater by the regenerative braking system to heat the heating fluid of the heat storage tank.

Example 13. The method of any one of examples 11-12, further comprising: controlling, by the processing circuitry, fluid flow of the heating fluid to at least one of the battery pack and an optional cabin heater fluidly coupled to the heat storage tank.

Example 14. The method of any of examples 11-13, further comprising: controlling, by the processing circuitry, fluid flow of the heating fluid to an external radiator fluidly coupled to the heat storage tank in response to that the temperature of the heating fluid in the heat storage tank is above a predefined temperature threshold value.

Example 15. The method of any of examples 11-14, wherein the predefined cold start operating mode is defined at least by that the ambient temperature of the vehicle is below a predetermined ambient temperature threshold value.

Example 16. The method of any of examples 11-15, wherein the predefined cold start operating mode is defined at least by that the electric traction machine is started from shutdown by power from the battery pack.

Example 17. The method of any of examples 11-16, further comprising: selectively prioritizing, by the processing circuitry, charging the battery pack and powering the electrical heater for heating the heating fluid in the heat storage tank based on the SOC of the battery pack and the temperature of the heating fluid in the heat storage tank.

Example 18. A computer program product comprising program code for performing, when executed by the processing circuitry, the method of any of examples 11-17.

Example 19. A non-transitory computer-readable storage medium comprising instructions, which when executed by the processing circuitry, cause the processing circuitry to perform the method of any of examples 11-17.

Example 20. A vehicle comprising an energy storage system of any of examples 1-10.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An energy storage system (30) of a vehicle (1) equipped with a regenerative braking system (2), the energy storage system (30) comprising:
- a battery pack (32) configured to power an electric traction machine (10) of the vehicle (1), the battery pack (32) being operable according to predefined limited state of charge (SOC) limits (140) extending from a lower limited SOC limit (130a) to an upper limited SOC limit (130b), and predefined extended SOC limits (142) extending from a lower extended SOC limit (132a) to an upper extended SOC limit (132b), the upper extended SOC limit (132b) being higher than the upper limited SOC limit (130b);
- a heat storage tank (34) comprising a heating fluid and an electrical heater (36);
- a processing circuitry (17) configured to:
- determine an anticipated operating mode of the vehicle (1) as a predefined cold start operating mode;
- in response of determining the anticipated cold start operating mode, charge the battery pack (32) in accordance with the extended SOC limits (142) to at least above a level corresponding to that of the upper limited SOC limit (130b);
- during subsequent operation of the vehicle (1) by powering the electric traction machine (10) by the battery pack (32), and in response of that the SOC of the battery pack (32) is within the extended SOC limits (142) and above a level corresponding to that of the upper limited SOC limit (130b), power the electric heater (36) by the regenerative braking system (2) to heat the heating fluid of the heat storage tank (34).

2. The energy storage system (30) of claim 1, wherein the processing circuitry (17) is further configured to, in response of that the SOC of the battery pack (32) is below a level corresponding to that of the upper limited SOC limit (130b), charge the battery pack (32) by the regenerative braking system (2), and optionally simultaneously power the electric heater (36) by the regenerative braking system (2) to heat the heating fluid of the heat storage tank (34).

3. The energy storage system (30) of any one of claims 1-2, optionally comprising a cabin heater (40) fluidly coupled to the heat storage tank (34), wherein the processing circuitry (17) is further configured to control fluid flow of the heating fluid to at least one of the battery pack (32) and the optional cabin heater (40).

4. The energy storage system (30) of any of claims 1-3, further comprising an external radiator (42) fluidly coupled to the heat storage tank (34), wherein the processing circuitry (17) is further configured to control fluid flow of the heating fluid to the external radiator (42) in response to that the temperature of the heating fluid in the heat storage tank (34) is above a predefined temperature threshold value.

5. The energy storage system (30) of any of claims 1-4, wherein the predefined cold start operating mode is defined at least by that the ambient temperature of the vehicle (1) is below a predetermined ambient temperature threshold value.

6. The energy storage system (30) of any of claims 1-5, wherein the predefined cold start operating mode is defined at least by that the electric traction machine (10) is started from shutdown by power from the battery pack (32).

7. The energy storage system (30) of any of claims 1-6, wherein the vehicle (1) is a loader or a dumper.

8. The energy storage system (30) of any of claims 1-7, wherein the heat storage tank (34) is arranged distant from the battery pack (32).

9. The energy storage system (30) of any of claims 1-8, wherein the processing circuitry (17) is further configured to selectively prioritize charging the battery pack (32) and powering the electrical heater (36) for heating the heating fluid in the heat storage tank (34) based on the SOC of the battery pack (32) and the temperature of the heating fluid in the heat storage tank (34).

10. The energy storage system (30) of any of claims 1-9, wherein the heat storage tank (34) comprises a thermal insulation layer (35) configured to reduce heat losses.

11. A computer-implemented method, comprising:
- determining (S10), by a processing circuitry (17) of a computer system, SOC operating windows (140, 142) of a battery pack (32) configured to power an electric traction machine (10) of an electric vehicle (1), according to predefined limited state of charge (SOC) limits (140) extending from a lower limited SOC limit (130a) to an upper limited SOC limit (130b), and predefined extended SOC limits (142) extending from a lower extended SOC limit (132a) to an upper extended SOC limit (132b), the upper extended SOC limit (132b) being higher than the upper limited SOC limit (130b);
- determining (S20), by the processing circuitry, an anticipated operating mode of the vehicle (1) as a predefined cold start operating mode;
- in response of determining the anticipated cold start operating mode, charging (S30), by the processing circuitry, the battery pack (32) in accordance with the extended SOC limits (142) to at least above a level corresponding to that of the upper limited SOC limit (130b);
- during subsequent operation of the vehicle (1) by powering (S40) the electric traction machine (10) by the battery pack (32), and in response of that the SOC of the battery pack (32) is within the extended SOC limits (142) and above a level corresponding to that of the upper limited SOC limit (130b), powering (S50), by the processing circuitry, an electric heater (36) arranged in a heat storage tank comprising a heating fluid by a regenerative braking system (2) of the vehicle in order to heat the heating fluid of the heat storage tank (34).

12. The method of claim 11, further comprising:
- in response of that the SOC of the battery pack (32) is below a level corresponding to that of the upper limited SOC limit (130b), charging (S60), by the processing circuitry, the battery pack (32) by the regenerative braking system (2), and optionally simultaneously powering (S70), by the processing circuitry, the electric heater (36) by the regenerative braking system (2) to heat the heating fluid of the heat storage tank (34).

13. A computer program product comprising program code for performing, when executed by the processing circuitry, the method of any of claims 11-12.

14. A non-transitory computer-readable storage medium comprising instructions, which when executed by the processing circuitry, cause the processing circuitry to perform the method of any of claims 11-12.

15. A vehicle comprising an energy storage system (30) of any of claims 1-10.
